# EUROPÄISCHE PATENTSCHRIFT

(11) **EP 2 135 721 B1**
(45) Veröffentlichungstag und Bekanntmachung des Hinweises auf die Patenterteilung: **13.02.2013**
(21) Anmeldenummer: 09007577.1
(22) Anmeldetag: 09.06.2009
(51) Int. Cl.: B27D 5/00, B23Q 15/007

(54) **Maschine zum Beschichten von Schmalflächenseiten plattenförmiger Werkstücke**
Machine for coating narrow sides of board-shaped workpieces
Machine de revêtement de faces de surfaces fines d'un élément en forme de plaques

(30) Priorität: 19.06.2008 DE 102008029166
(43) Veröffentlichungstag der Anmeldung: 23.12.2009
(73) Patentinhaber: IMA Klessmann GmbH Holzbearbeitungssysteme, 32312 Lübbecke (DE)
(72) Erfinder: Hampel, Thomas, 32312 Lübbecke (DE)
(74) Vertreter: Schober, Mirko

(56) Entgegenhaltungen:
- EP-A2- 1 464 470
- DE-C1- 19 913 696

## Beschreibung

Die Erfindung bezieht sich auf eine Maschine gemäß den Merkmalen des Oberbegriffs des Patentanspruchs 1.

Bei solchen Maschinen werden die relativen Positionen zwischen den Fräswerkzeugen der Fräsaggregate und den Tastvorrichtungen, die sich an den Außenseiten der auf die Werkstücke aufgebrachten Kantenabschnitte abstützen, in Abhängigkeit von der Grunddicke des verwendeten Kantenbandes fest eingestellt. Im Idealfall bearbeiten die Fräswerkzeuge der Fräsaggregate die mit einem Überstand nach oben und nach unten hin auf die Werkstückschmalflächenseiten aufgebrachten Kantenbandabschnitte in der Weise, dass die oberen und unteren Kanten der nachgefrästen Kantenbandabschnitte exakt in der oberseitigen und in der unterseitigen Plattenebene der Werkstücke liegen. Bei den meist verwendeten Formfräsern, welche die oberen und die unteren Kanten der Kantenbandabschnitte mit einer konvexen Rundung versehen, ist in diesem Idealfall die obere Plattenebene wie auch die untere Plattenebene der Werkstücke die Tangentialebene zu den erwähnten Kantenrundungen.

Die plattenförmigen Werkstücke aus Holz und/oder Holzaustauschstoffen werden vornehmlich in der Möbelindustrie und im Innenausbau verwendet, und hier werden an die Qualität der mit einem Kantenband beschichteten Platten hohe Anforderungen gestellt, die sich auch auf den Bereich der Fugen zwischen den Kantenbandabschnitten und den Plattenseiten beziehen. Ein besonderes Problem besteht bei der Verwendung sogenannter Dickkanten als Kantenbänder, die Dicken in der Größenordnung von 3 mm aufweisen. Solche in der Regel aus Kunststoff bestehenden Kantenbänder, die im Extrusionsverfahren hergestellt werden, haben merkliche Dickentoleranzen, aufgrund deren der vorstehend geschilderte Idealfall nicht erreicht werden kann. Weist der auf die Werkstückschmalflächenseiten aufgebrachte Kantenabschnitt in der Dicke eine Plustoleranz auf, halten die Fräswerkzeuge einen zu großen Abstand von der Werkstückschmalflächenseite ein. Entsprechend geringer ist der Werkzeugeingriff am Kantenbandabschnitt, und dadurch wird der Überstand des Kantenbandabschnittes über die oberen und/oder unteren Breitseiten der plattenförmigen Werkstücke nicht restlos abgetragen. Hierdurch entsteht im Fugenbereich zwischen dem Kantenbandabschnitt und der betreffenden Werkstückbreitseite eine störende Stufe. Des weiteren wird eine zugleich an den Kantenbandabschnitt anzuformende Kantenrundung nur teilweise ausgeführt und reicht nicht bis an die Ober- oder Unterkante der Werkstückschmalflächenseite heran. Im umgekehrten Fall einer Minustoleranz in der Dicke des Kantenbandabschnittes nehmen die Fräswerkzeuge eine Position ein, in der ihr Abstand zu der Werkstückschmalflächenseite zu gering ist. Hierdurch wird ein tieferer Werkzeugeingriff am Kantenbandabschnitt bewirkt und zuviel Material abgetragen. Hierbei erfolgt ein Anschnitt der Trägerplatte, der durch das Beschichtungsmaterial der Trägerplatte an den Breitseiten hindurchgehen kann, wodurch der innere Materialaufbau der Trägerplatte sichtbar wird.

Aus DE 199 13 696 C1 ist bekannt, die Oberflächen von durchlaufenden Holzplatten abzutasten. Dies geschieht mit einer eine Fräseinrichtung steuernde Abtasteinrichtung, welche einen optischen Sensor aufweist. Die Fräseinrichtung ist an einem Support mittels eines Stellantriebes relativ zur Ebene der durchlaufenden Werkstücke verfahrbar. Der Sensor tastet die Oberfläche der Holzplatte entgegen der Durchlaufrichtung beabstandet vom Fräser ab und steuert entsprechend zeitverzögert den Stellantrieb der Fräseinrichtung.

Der Erfindung liegt die Aufgabe zugrunde, eine Maschine der eingangs genannten Art zu schaffen, mit der trotz vorhandener Dickentoleranzen der Kantenbänder auf die Werkstückschmalflächenseiten aufgebrachten Kantenbandabschnitte so nachbearbeitet werden können, dass sie einwandfrei an die Breitflächenseiten der plattenförmigen Werkstücke anschließen.

Diese Aufgabe wird mit einer Maschine gelöst, welche die Gesamtheit der Merkmale des Patentanspruchs 1 aufweist.

Für die Erfindung ist wesentlich, dass ausgehend von der Grundeinstellung, die der Grunddicke des jeweils verwendeten Kantenbandes entspricht, eine Korrektur des Abstandes der Fräswerkzeuge der Fräsaggregate von den Schmalflächenseiten der Werkstücke selbst entsprechend den auszugleichenden Dickentoleranzen des aufgebrachten Kantenbandmaterials laufend vorgenommen wird. Damit wird eine Nachbearbeitung der Kantenbandabschnitte an den Werkstücken erzielt, die dem weiter oben dargelegten Idealfall entspricht.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine schematische Draufsicht auf denjenigen Bereich einer Maschine zum Beschichten von Schmalflächenseiten plattenförmiger Werkstücke, in welchem das jeweilige Kantenband an die Werkstücke herangeführt und daran angefahren wird,
- Fig. 2: einen Schnitt durch die Beschichtungsstation der Maschine entlang der Linie A-B in Fig. 1 begrenzt auf den Bearbeitungsbereich,
- Fig. 3: einen Teilquerschnitt durch eines der beschichteten Werkstücke im Bereich des aufgebrachten Kantenbandabschnittes vor der Nachbearbeitung,
- Fig. 4: einen Fig. 2 entsprechenden Werkstückquerschnitt im Falle fehlerhafter Nachbearbeitung erster Art und
- Fig. 5: einen Fig. 3 entsprechenden Werkstückquerschnitt im Falle fehlerhafter Nachbearbeitung zweiter Art.

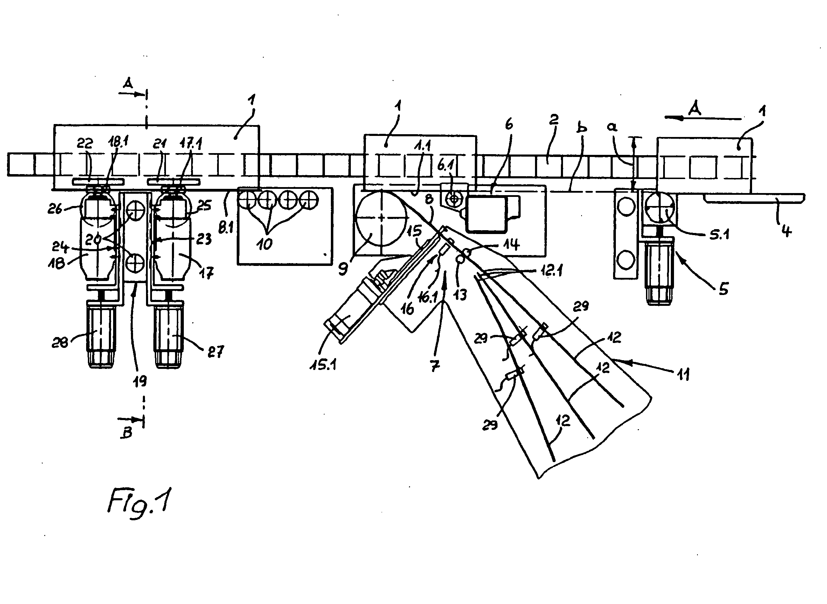

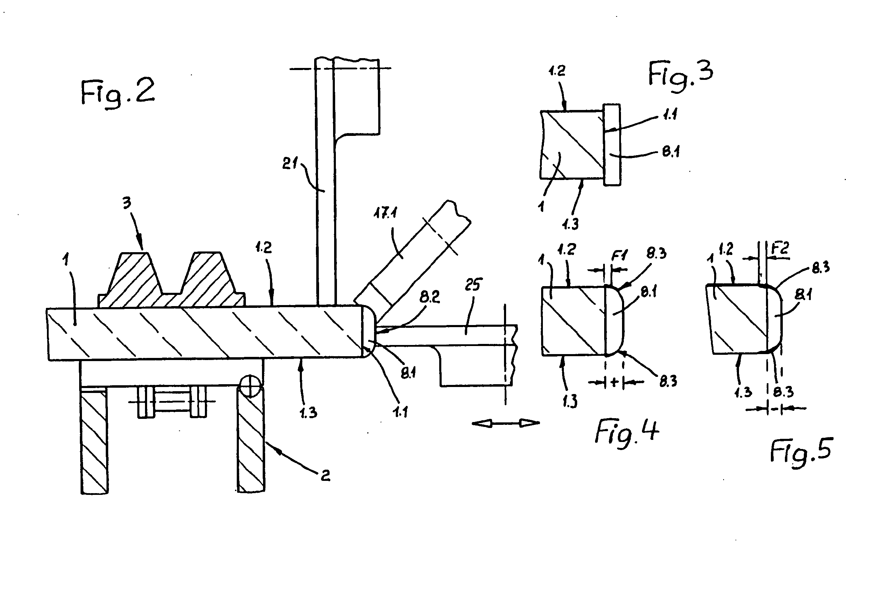

Fig. 1 zeigt im einzelnen plattenförmige Werkstücke 1 in einem rechteckigen Format, wie sie vornehmlich im Möbelbau, besonders im Küchenmöbelbau verwendet werden. Die Werkstücke 1 werden in Richtung des Pfeiles A auf einer Transportvorrichtung 2, 3 in geradliniger Richtung befördert, und diese Transportvorrichtung besteht aus einer unteren Transportkette 2 und einem die Werkstücke 1 gegen die Transportkette 2 verspannenden Oberdruck 3, der aus Fig. 2 hervorgeht. Die Transportvorrichtung 2, 3 ist Teil einer Durchlaufmaschine, in der die Schmalflächenseiten der Werkstücke 1, hier die Schmalflächenseiten 1.1, mit einem Kantenmaterial beschichtet werden. Die hierfür vorgesehene Beschichtungsstation kann in eine Durchlaufmaschine integriert sein, in der weitere Bearbeitungen an den plattenförmigen Werkstücken 1 vorgenommen werden.

Beim Einlauf in die Beschichtungsstation werden die Werkstücke 1 entlang einem Einlauflineal 4 geführt und passieren danach als erstes ein Einlauffräsaggregat 5 mit einem Fräswerkzeug 5.1, welches ein Nachformatieren an den Werkstücken 1 vornimmt. Hierdurch wird ein Übermaß an den zu beschichtenden Schmalflächenseiten der Werkstücke 1 abgetragen und mit einem Maß a eine Basis für die Plattenbreite der Werkstücke 1 geschaffen, die nach der Beschichtung ihrer Schmalflächenseiten 1.1 eine vorbestimmte Gesamtbreite aufweisen müssen. Mit den bearbeiteten Schmalflächenseiten 1.1 werden die Werkstücke 1 entlang einer Durchlauflinie b durch die Beschichtungsstation der Maschine hindurchgeführt.

Die Werkstücke 1 laufen an einer Vorrichtung 6 zur Angabe eines Klebers an die Schmalflächenseiten 1.1 vorbei, hier wird der Kleber mittels einer Angaberolle 6.1 auf die Werkstück-Schmalflächenseiten 1.1 aufgetragen.

Als nächstes passieren die Werkstücke 1 eine Zuführvorrichtung 7 für ein Kantenband 8, welches mittels einer Andruckrolle 9 an die mit dem Kleber beschichteten Schmalflächenseiten 1.1 der Werkstücke 1 angefahren wird. Im weiteren Durchlauf der Werkstücke 1 wird das Kantenband mittels Nachdruckrollen 10 an die Werkstückschmalflächenseiten 1.1 angepresst.

Das Kantenband 8 wird aus einem Magazin 11 abgezogen, welches mehrere Spuren 12 für gleiche oder unterschiedliche Kantenbänder aufweist. Die Enden 12.1 der Spuren 12, aus denen das jeweils verwendete Kantenband 8 austritt, sind auf die Zuführvorrichtung 7 ausgerichtet. Zu dieser gehören zwei Einzugsrollen 13 und 14 sowie ein Trennmesser 15 mit einem Antrieb 15.1, mit welchem von dem einlaufenden Kantenband 8 ein Abschnitt 8.1 abgetrennt wird, welcher gleich lang wie die Länge der zu beschichtenden Werkstückschmalflächenseiten 1.1 ist. Zumindest die Einzugrollen 13, 14 und das Trennmesser 15 der Zuführvorrichtung 7 können in das Kantenmagazin 11 integriert sein, die der gesamten Zuführvorrichtung 7 zuzurechnende Andruckrolle 9 und die Nachdruckrollen 10, die unmittelbar am Transportweg der Transportvorrichtung 2, 3 angeordnet sind, stellen eine vom Magazin 11 unabhängige bauliche Einheit dar.

In Durchlaufrichtung des Kantenbandes 8 gesehen befindet sich vor dem Trennmesser 15 eine Messvorrichtung 16 mit einem elektrischen Anschluss 16.1 der zu einer in der Zeichnung nicht dargestellten Steuereinheit führt. Die Messvorrichtung 16 erfasst die Dickentoleranzen des jeweils verwendeten Kantenbandes 8; in Anpassung an den Toleranzbereich, der ausgehend von der Grunddicke der Kantenbänder 8 zu berücksichtigen ist, ist die Messvorrichtung 16 ausreichend feinfühlig ausgebildet.

Nach dem Anpressen des Kantenbandabschnittes 8.1 an die Werkstückschmalflächenseiten 1.1 mittels der Nachdruckrollen 10 gelangen die Werkstücke 1 im weiteren Durchlauf an eine Nachfrässtation mit Fräsaggregaten 17 und 18. Wie Fig. 3 deutlich macht, ist eine solche Nachbearbeitung erforderlich, weil der Kantenbandabschnitt 8.1, der auf die Werkstück-Schmalflächenseiten 1.1 aufgebracht worden ist, sowohl nach oben über die obere Breitflächenseite 1.2 als auch nach unten über die untere Breitflächenseite 1.3 der Werkstücke 1 übersteht. Wie weiter in Figur 4 veranschaulicht ist, muss bei einer Plustoleranz der Dicke des Kantenbandabschnittes 8.1 vermieden werden, dass ein Überstand F1 über die Breitflächenseiten 1.2, 1.3 stehen bleibt und sich eine Kantenrundung 8.3 am Kantenbandabschnitt 8.1 nicht voll ausbildet. Im Falle einer Minustoleranz der Dicke des Kantenbandabschnittes 8.1 ist auszuschließen, dass bei der Fräs-Nachbearbeitung sich zwar die vorgesehene Kantenrundung 8.3 am Kantenbandabschnitt 8.1 voll ausbildet aber nicht tangential an die Ebenen der Breitflächenseiten 1.2, 1.3 der Werkstücke 1 anschließt, so dass die Trägerplatte der Werkstücke 1 angeschnitten wird und eine Schadstelle F2 entsteht, wie Fig. 5 zeigt.

Das vorstehende Problem wird durch eine besondere Steuerung der an sich üblichen Nachfräsaggregate 17, 18 gelöst. Die Fräsaggregate 17, 18 sind an einem Gestell 19 mit vertikalen Führungen 20 angeordnet, entlang denen die Fräsaggregate 17, 18 in Höhenrichtung verfahrbar sind. Das Fräsaggregat 17 mit seinem Fräswerkzeug 17.1 bearbeitet die Oberkante des Kantenbandabschnittes 8.1 und ist deshalb von oben her an den Kantenbandabschnitt 8.1 heranfahrbar. Die Justierung des Fräsaggregates 17 erfolgt mittels eines Höhentasters 21, über den das Fräswerkzeug 17.1 auf die passende Höhenlage gesteuert wird. Das zweite Fräsaggregat 18 dient zur Bearbeitung der Unterkante am Kantenbandabschnitt 8.1 der Werkstücke 1 und weist in analoger Weise zum Fräsaggregat 17 ein von unten an den Kantenbandabschnitt 8.1 heran fahrbares Fräswerkzeug 18.1 auf, dessen Werkstückeingriffsposition mittels eines sich an die untere Breitflächenseite 1.3 der Werkstücke 1 anlegenden Höhentasters 22 gesteuert wird. Die zugehörigen Stellantriebe für die Höhenausrichtung der Fräsaggregate 17, 18 sind in der Zeichnung nicht wiedergegeben.

Des weiteren sind die Fräsaggregate 17, 18 in zweifacher Weise senkrecht zu derjenigen Ebene verfahrbar, in der sich die ebenen Werkstückschmalflächenseiten 1.1 ohne Berücksichtigung des darauf aufgebrachten Kantenbandabschnittes 8.1 beim Durchlauf bewegen. Die Fräsaggregate 17, 18 weisen Tastvorrichtungen 25 und 26 auf, welche, wie vor allem Fig. 2 zeigt, sich in demjenigen Bereich an der Außenseite 8.2 des Kantenbandabschnittes 8.1 abstützen, der nicht von den Fräswerkzeugen 17.1, 18.1 bearbeitet wird. Die Tastvorrichtungen 25, 26 geben für die Fräswerkzeuge 17.1, 18.1 diejenige Bearbeitungsposition vor, die sich nach der Grunddicke des jeweils verwendeten Kantenbandes 8 richtet. Die Tastvorrichtungen 25, 26, bei denen es sich um Tasträder handelt, werden zunächst auf eine sogenannte Vortastung eingestellt. Laufen die Werkstücke 1 mit ihren Kantenbandabschnitten 8.1 auf die Tastvorrichtungen 24 auf und drängen diese in die Tastposition zurück, werden die Fräsaggregate 17, 18 von nicht dargestellten Stellantrieben mit synchroner Bewegung auf die Bearbeitungsposition der Fräswerkzeuge 17.1, 18.1 verfahren. Des weiteren sind am Gestell 19 Führungen 23, 24 und Stellantriebe 27, 28 vorhanden, um in einer überlagernden Bewegung die Fräsaggregate 17, 18 in Richtung zu den vorbeilaufenden Werkstücken 1 hin oder von diesen weg verfahren zu können. Solche Stellantriebe, wie die Stellantriebe 27, 28, sind an sich bei einer programmgesteuerten Maschine vorgesehen, um die Grundpositionen der Fräsaggregate 17, 18 und damit die der Fräswerkzeuge 17.1, 18.1 in Relation zu den Tastvorrichtungen 24, 25 entsprechend der Grunddicke des verwendeten Kantenbandes 8 über die zentrale Maschinensteuerung einzustellen.

Die Besonderheit besteht nun darin, über die Stellantriebe 27, 28 einen Toleranzausgleich vornehmen zu können, um Abweichungen der Kantenbandabschnitte 8.1 von der Grunddicke des verwendeten Kantenbandes 8 kompensieren zu können. Dazu dient die vorerwähnte Messvorrichtung 16, die der Steuereinheit für die Stellantriebe 27, 28 ein Signal liefert, welches die Dickenabweichungen des Kantenbandes 8 im Bereich des Zuführvorrichtung 7 erfasst. Entsprechend der Dauer, die jede Stelle des Kantenbandes 8 benötigt, um die Fräswerkzeuge 17.1, 18.1 der Fräsaggregate 17, 18 zu erreichen, gibt die Steuereinheit ein zeitverzögertes Stellsignal an die Stellantriebe 27, 28, um in Überlagerung der Positionsvorgaben durch die Tastvorrichtungen 24, 25 die Fräsaggregate 17, 18 und damit die Fräswerkzeuge 17.1, 18.1 fortlaufend näher zu den durchlaufenden Werkstücken 1 hin oder von diesen weiter weg zu positionieren.

Die Zuführvorrichtung 7 mit der Messvorrichtung 16 ist, wie dargestellt, in das Magazin 11 integriert, und die Messvorrichtung 16 ist zwischen den Einzugrollen 13, 14 und dem Trennmesser 15 angeordnet. Entsprechend ist die Messvorrichtung 16 in der Durchlaufrichtung des jeweiligen Kantenbandes 8 gesehen hinter den Auslaufenden 12.1 der Spuren 12 im Magazin 11 angeordnet. Für die Messvorrichtung 16 kommen entlang dem Durchlaufweg des Kantenbandes 8 auch andere Positionen in Betracht. Ist die Messvorrichtung 16 hinter der Andruckrolle 9, gegebenenfalls im Bereich der Nachdruckrollen 10 oder in Durchlaufrichtung gesehen noch dahinter angeordnet, können damit auch diejenigen Abweichungen erfasst werden, die sich nicht allein aus der Dickentoleranz des jeweils verwendeten Kantenbandes 8 ergeben. Unregelmäßigkeiten, die durch die Kleberangabe an die zu beschichtenden Werkstück-Schmalflächenseiten 1.1 oder durch Erhebungen oder Vertiefungen an diesen Schmalflächenseiten 1.1 bedingt sind, werden zugleich mit etwaigen Dickentoleranzen des jeweiligen Kantenbandabschnittes 8.1 erfasst und in der Steuereinheit verwertet, die für die fortlaufende, überlagernde Positionierung der Fräsaggregate 17, 18 parallel zur Plattenebene der durchlaufenden Werkstücke 1 zuständig ist.

Um die Gesamtanordnung auf die Grunddicke des jeweiligen Kantenbandes im Maschinenprogramm einstellen zu können, sind an jeder der Spuren 12, die einem der zu verwendenden Kantenbänder 8 zugeordnet sind, Messvorrichtungen 29 im Magazin 11 vorgesehen. Die Signale dieser Messvorrichtungen 29 werden in der Maschinensteuerung nicht nur dazu genutzt, die Grundposition der Fräsaggregate 17, 18 vorzugeben, es wird damit auch die Position des Einlauffräsaggregates 5 vorbestimmt, welches mit seinem Fräswerkzeug 5.1 senkrecht zu den ihm zugewandten Schmalflächenseiten der Werkstücke 1 verfahrbar und positionierbar ist.

## Patentansprüche

1. Maschine zum Beschichten von Schmalflächenseiten (1.1) an plattenförmigen Werkstücken (1) aus Holz und/oder Holzersatzstoffen mit einem Kantenband (8) im Durchlauf
mit einer die Werkstücke (1) lagefest aufnehmenden Transportvorrichtung (2, 3),
mit einer an deren Transportweg angeordneten Zuführvorrichtung (7) zum Anfahren eines Kantenbandabschnittes (8.1) an die jeweils vorbeilaufende Werkstück-Schmalflächenseite (1.1)
und mit in Durchlaufrichtung dahinter am Transportweg angeordneten Fräsaggregaten (17, 18) zum Profilieren und/oder zum Bündigfräsen der auf die Werkstück-Schmalflächenseiten (1.1) aufgebrachten Kantenbandabschnitte (8.1),
wobei diese Fräsaggregate (17,18) mittels Stellantrieben (27, 28) parallel zur Plattenebene der Werkstücke (1) zu deren Schmalflächenseiten (1.1) hin zustellbar und mittels sich federnd an der Außenseite (8.2) der Kantenbandabschnitte (8.1) abstützenden Tastvorrichtungen (25, 26) in einer vorgegebenen, der Grunddicke des jeweils verwendeten Kantenbandes (8) entsprechenden Position der Fräswerkzeuge (17.1, 17.2) justiert sind,
**dadurch gekennzeichnet,**
**dass** im Bereich der Zuführvorrichtung (7) ein die Dickentoleranzen des Kantenbandes (8) erfassende Messvorrichtung (16) angeordnet ist, die ein von diesen Toleranzen abhängiges Signal erzeugt, und eine Steuereinheit vorhanden ist, die unter Auswertung dieses Signals und unter Berücksichtigung des von dem Kantenband (8) zwischen der Messstelle und der Stelle des Eingriffs der Fräswerkzeuge (17.1, 18.1) durchlaufenen Weges die Stellantriebe (27, 28) der Fräsaggregate (17, 18) mit entsprechender Verzögerung auf eine dem Toleranzausgleich entsprechende Position der Fräswerkzeuge (17.1, 18.1) steuert.

2. Maschine nach Anspruch 1,
**dadurch gekennzeichnet,**
**dass** die Zuführvorrichtung (7) in ein Kantenband-Magazin (11) integriert ist und Einzugrollen (13, 14) sowie an die Kantenbandabschnitte (8.1) ablängendes Trennmesser (15) aufweist, wobei in der Durchlaufrichtung des Kantenbandes (8) gesehen sich die Messvorrichtung (16) hinter den Einzugrollen (13, 14) befindet.

3. Maschine nach Anspruch 2,
**dadurch gekennzeichnet,**
**dass** das Magazin (11) zwei oder mehrere auf die Zuführvorrichtung (7) ausgerichtete Spuren (12) für gleiche und/oder unterschiedliche Kantenbänder (8) aufweist, die Einzugrollen (13, 14) mit der dahinter befindlichen Messvorrichtung (16) hinter den Auslaufenden (12.1) dieser Spuren (12) angeordnet sind.

4. Maschine nach Anspruch 3,
**dadurch gekennzeichnet,**
**dass** im Bereich jeder Spur (12) des Magazins (11) eine weitere Messvorrichtung (29) zur Erfassung der Grunddicke der Kantenbänder (8) angeordnet ist, wonach die Steuereinheit die Grundposition zwischen den Tastvorrichtungen (25, 26) und den Fräswerkzeugen (17.1, 18.1) mittels der Stellantriebe (27, 28) der Fräsaggregate (17, 18) für das jeweils verwendete Kantenband (8) einstellt.

5. Maschine nach Anspruch 4,
**dadurch gekennzeichnet,**
**dass** die Steuereinheit des weiteren ein Einlauffräsaggregat (5) steuert, welches in der Durchlaufrichtung gesehen vor der Zuführvorrichtung (7) am Transportweg der Transportvorrichtung (2, 3) angeordnet ist und in Abhängigkeit von der erfassten Grunddicke des jeweiligen Kantenbandes (8) die Plattenbreite der Werkstücke (1) auf ein Maß (a) kürzt, welches auf die Gesamtbreite der mit den Kantenbandabschnitten (8.1) beschichteten Werkstücke (1) abgestimmt ist.

6. Maschine nach Anspruch 1,
**dadurch gekennzeichnet,**
**dass** die Zuführvorrichtung (7) zumindest eine die Kantenbandabschnitte (8.1) an die Werkstück-Schmalflächenseiten (1.1) anfahrende Andruckrolle (9) umfasst und die Messvorrichtung (16) in der Durchlaufrichtung gesehen hinter der Andruckrolle (9) angeordnet ist.

## Claims

1. Machine for coating narrow sides (1.1) of board-shaped workpieces (1) made of wood and/or wood substitutes with an edging band (8) in a continuous process with a transport device (2, 3) which holds the workpieces (1) in fixed position, with a feed device (7) arranged on the transport path thereof for bringing an edging band section (8.1) up to the narrow side (1.1) of each passing workpiece and with milling assemblies (17, 18) arranged behind on the transport path in the run-through direction for profiling and/or for flush-milling the edging band sections (8.1) which are applied to the narrow sides (1.1) of the workpiece, wherein these milling assemblies (17, 18) can be set up by means of adjusting drives (27, 28) parallel to the panel plane of the workpieces (1) towards their narrow sides (1.1) and are adjusted by means of sensor devices (25, 26) resiliently supported on the outside (8.2) of the edging band sections (8.1) in a predetermined position of the milling tools (17.1, 17.2) corresponding to the base thickness of the relevant edging band (8) used, **characterised in that** in the area of the feed device (7) there is a measuring device (16) which detects the thickness tolerances of the edging band (8) and generates a signal dependent on these tolerances, and a control unit is provided which by evaluating this signal and taking into account the path through which the edging band (8) runs between the measuring point and the point of engagement of the milling tools (17.1, 18.1) regulates the adjusting drives (27, 28) of the milling units (17, 18) with corresponding deceleration to a position of the milling tools (17.1, 18.1) corresponding to the tolerance compensation.

2. Machine according to claim 1 **characterised in that** the feed device (7) is integrated in an edging band magazine (11) and has feeder rollers (13, 14) as well as a cutter (15) which cuts off the lengths of edging band sections (8.1) wherein seen in the run-through direction of the edging band (8) the measuring device (16) is located behind the feeder rollers (13, 14).

3. Machine according to claim 2 **characterised in that** the magazine (11) has two or more tracks (12) lined up to the feed device (7) for identical and/or different edging bands (8), the feed rollers (13, 14) together with the measuring device (16) located behind same are arranged behind the outlet ends (12.1) of these tracks (12).

4. Machine according to claim 3 **characterised in that** in the area of each track (12) of the magazine (11) there is a further measuring device (29) for detecting the base thickness of the edging bands (8) according to which the control unit adjusts for the relevant edging band (8) used the base position between the scanning devices (25, 26) and the milling tools (17.1, 18.1) by means of the adjusting drives (27, 28) of the milling units (17, 18).

5. Machine according to claim 4 **characterised in that** the control unit furthermore controls an infeed milling unit (5) which seen in the through-flow direction is arranged in front of the feed device (7) on the transport path of the transport device (2, 3) and in dependence on the detected base thickness of the relevant edging band (8) shortens the plate width of the workpieces (1) to a size (a) which is matched to the overall width of the workpieces (1) coated with the edging band section (8.1).

6. Machine according to claim 1 **characterised in that** the feed device (7) comprises at least a contact pressure roller (9) which moves the edging band sections (8.1) up to the narrow sides (1.1) of the workpiece and the measuring device (16) is arranged behind the contact pressure roller (9) seen in the through-flow direction.

## Revendications

1. Machine de revêtements des chants de surfaces étroites (1.1) de pièces à usiner (1) en forme de plaques, en bois et / ou en substituts de bois, avec une bande de chant (8), en passage continu,
avec un dispositif de transport (2, 3), qui prend en charge les pièces à usiner (1) fixement positionnées, avec un dispositif d'alimentation (7), agencé sur le chemin de transport, pour amener une section (8.1) de bande de chant sur le chant (1.1) de la pièce à usiner qui défile,
et avec des groupes de fraisage (17, 18), agencés sur le chemin de transport, en aval dans la direction de passage, pour le profilage et / ou le fraisage à fleur des sections (8.1) de bande de chant appliquées sur les chants de surfaces étroites (1.1),
sachant que ces groupes de fraisage (17, 18) peuvent être amenés au moyen de mécanismes de commande (27, 28) parallèlement au plan des pièces à usiner (1), vers leurs chants de surfaces étroites (1.1) et être ajustés, au moyens de dispositifs de balayage (25, 26) s'appuyant élastiquement sur la face extérieure (8.2) des sections (8.1) de bande de chant, dans une position des groupes de fraisage (17.1, 17.2) prédéterminée en fonction de l'épaisseur initiale de la bande de chant (8) chaque fois utilisée,
**caractérisée en ce que**,
dans la région du dispositif d'alimentation (7), est agencé un dispositif de mesure (16), qui, captant la tolérance d'épaisseur de la bande de chant (8), génère un signal en fonction de ces tolérances, et qu'est prévue une unité de commande, qui, évaluant ce signal et prenant en considération le chemin parcouru par la bande de chant (8) entre le point de mesure et le point d'attaque des groupes de fraisage (17.1, 18.1), commande les mécanismes d'entraînement (27, 28) des groupes de fraisage (17, 18), avec une temporisation adéquate, pour amener les groupes de fraisage (17, 18) dans une position correspondant à la compensation de tolérance.

2. Machine selon la revendication 1, **caractérisée en ce que** le dispositif d'alimentation (7) est intégré dans un magasin (11) de bande de chant et est doté de rouleaux d'amenée (13, 14) ainsi que d'une lame de coupe (15) mettant à longueur les sections (8.1) de bande de chant, sachant que, vu dans la direction de passage de la bande de chant (8), le dispositif de mesure (16) est situé en aval des rouleaux d'amenée (13, 14).

3. Machine selon la revendication 2, **caractérisée en ce que** le magasin (1) est doté de deux ou de plusieurs pistes, orientées sur le dispositif d'alimentation (7) pour des bandes de chant (8) identiques et / ou différentes, que les rouleaux d'amenée (13, avec le dispositif de mesure en aval d'eux, sont disposés en aval des extrémités (12.1) de ces pistes (12).

4. Machine selon la revendication 3, **caractérisée en ce que**, dans la région de chaque piste (12) du magasin (11) est disposé un autre dispositif de mesure (29) pour la détection de l'épaisseur initiale des bandes de chant (8), ce après quoi, l'unité de commande règle la position de base entre les dispositifs de balayage (25, 26) et les outils de fraisage (17.1, 18.1) au moyen des mécanismes d'entraînement (27, 28) des groupes de fraisage (17, 18) pour la bande de chant (8) chaque fois utilisée.

5. Machine selon la revendication 4, **caractérisée en ce que** l'unité de commande commande, en plus, un groupe de fraisage d'entrée (5), qui, vu dans la direction de passage, est disposé en amont du dispositif d'alimentation (7), sur le chemin du dispositif de transport (2, 3), et raccourcit la largeur à plat des pièces à usiner (1) d'une mesure (a) en fonction de l'épaisseur initiale de chaque bande de chant (8) détectée, laquelle est accordée à la largeur totale des pièces à usiner (1) revêtues avec les sections (8.1) de bande de chant.

6. Machine selon la revendication 1, **caractérisée en ce que** le dispositif d'alimentation (7) comprend au moins un rouleau de pression (9), qui amène les bandes de chant (8.1) sur les surfaces étroites (1.1) des pièces à usiner et que le dispositif de mesure (16), vu dans la direction de passage, est disposé en aval du rouleau de pression (9).
